Europäisches Patentamt

**European Patent Office**

Office européen des brevets

(19)

(11) Publication number: **0 056 733**

**A1**

(12) **EUROPEAN PATENT APPLICATION**

(21) Application number: **82300277.9**

(22) Date of filing: **19.01.82**

(51) Int. Cl.³: **A 01 K 39/012**

(30) Priority: **19.01.81 US 226352**

(43) Date of publication of application:
**28.07.82 Bulletin 82/30**

(84) Designated Contracting States:
**DE FR GB IT NL**

(71) Applicant: **U.S. INDUSTRIES, INC.**
**One Cummings Point Road Post Office Box 10207**
**Stamford Connecticut(US)**

(72) Inventor: **Williams, William Ronald**
**1476 East Raintree Drive**
**Roswell Georgia(US)**

(74) Representative: **Robinson, Anthony John**
**Metcalf et al,**
**Kilburn & Strode 30 John Street**
**London, WC1N 2DD(GB)**

(54) **Poultry feed system.**

(57) A feeder unit for automatic, multi-tier animal feed systems, such as for poultry and the like, of the type having a plurality of conveyors (15) to which feed is supplied from a remote storage bin. The feeder unit has a low profile housing, and a mounting bracket which positions the conveyor drive motor alongside the housing to minimize the overall height of the feeder unit, so that the feeder units can be vertically stacked closely together for substantial space saving and efficiency. The housings include a passageway through a sidewall and a base thereof, in which a feed supply conduit (5) is inserted to transport feed from a remote storage bin into a hopper portion (8) of the feeder units.

FIG. I

EP 0 056 733 A1

0056733

# POULTRY FEED SYSTEM

This invention relates to mechanical animal feed systems, and in particular to a low profile conveyor feeder.

Multi-tier animal confinement systems, such as battery hen systems for egg production are used quite extensively by commercial producers. One example is that shown in Big Dutchman brochure PROFIT-TIER Publication No. SL-179-65, a copy of which is filed herewith. In such systems, it is advantageous to retain a maximum number of birds in a given space, so as to improve efficiency of the operation, and reduce the associated costs on a per bird basis.

In the system described in the aforementioned publication, cages are arranged in tiers one above the other, each tier - of which there may, for example, be four - comprising a pair of rows of cages arranged back-to-back but with a space between the rows, the width of the space decreasing upwards from row to row so that when viewed from one end, the rows are arranged in an inverted V, each row being above and to the rear of the row below. At the level of each tier there is a feed conveyor having a path which is generally rectangular in plan, each leg of the rectangle comprising a trough in which travels a common chain or other moving element. The two larger legs of the rectangle extend generally outboard of the two rows of cages at positions where birds in the cages can feed from food travelling along the conveyor. At three of the four corners of the rectangle there are means for changing the direction of travel of the moving element through a right angle.  At the fourth corner there is a feed
unit which, in addition to changing the direction of
travel of the moving element, also provides drive to
the moving element and also has means for supplying
feed to the conveyor to replenish food which has
been removed or lost from the conveyor during the
preceding circuit of the moving element around the
rectangle.  The feed unit includes a feed hopper and
there are means to keep the feed hoppers filled from
a common feed supply.  Because of the height of the
conveyor feed units, the cage tiers cannot be stacked
closely together, thereby resulting in additional
material costs, and increasing the building size
required to house the system.  Although the conveyor
feeders can be staggered to reduce the overall
height of the system, as shown by the corner hoppers
in the Big Dutchman PROFIT-TIER brochure noted
above, this arrangement increases the total length
of the system.  Further, where a substantial offset
is required, there may be insufficient room to permit
each feeder to be located at a corner of the conveyor,
thereby requiring two different styles of conveyor
feeders for the same system.  Hence, staggered corner
feeder arrangements are generally considered less
desirable than systems wherein the feeders are located
at one corner of the conveyors, and are disposed in
a generally vertically aligned configuration.

In stacking corner hoppers vertically one above
the other without any offset in order to condense the
size of the entire system the following problems are encountered: the height of the hoppers is such that in order to produce a low profile multi-tier poultry cage system, the hoppers would be stacked so closely together in vertical alignment that it would be virtually impossible to drop the feed into the hoppers from the overhead conveyor; most corner feed hoppers have drive motors mounted on the upper surface of the outelt side of the housing to achieve a reasonably direct drive line to the feed chain drive sprocket which also increases the vertical profile of the entire system. For these reasons, it is believed that no one has conceived of any arrangement or construction of corner hoppers whereby the hoppers can be located one on top of the other with little vertical space therebetween so as to reduce the profile of the . entire system.

According to one aspect of the present invention, a multi-tier poultry feed system comprises a plurality of stacked conveyor mechanisms to each of which feed is supplied from a remotely disposed source by an individual feed supply conduit, each mechanism including a hopper, a feed trough and means for conveying feed from the hopper along the feed trough.and is characterised in that: the hoppers are vertically stacked closely together one above the other for space saving and efficiency; each of the hoppers includes a housing formed by a plurality of walls that define an area for containing feed; the housing having an upwardly facing open top end for receiving feed; the housing walls being so arranged to provide a cavity below a portion of the hopper and a side opening leading into the said cavity thereby providing communication with the cavity from outside the hopper; and the cavity and side opening, when one of the hoppers is located directly above another of the underlying hoppers, forming a passageway disposed immediately above·the upwardly facing open end of the underlying feed hopper and extending outside the confines of the walls of the housing, whereby the passageway can receive one of the feed supply conduits, so as to permit transport of feed through the conduit from the remotely disposed source into the underlying feed hopper. The invention thus provides a low profile feeder unit for automated, multi-tier animal feed systems, such that the respective conveyor tiers can be stacked closely together, without interfering with the conveyor feed chain drive or impairing the flow of fresh, make-up feed to the hoppers. Preferably, a mount supports the feeder drive motor alongside the hopper housing, thereby minimizing the overall height of the corner hoppers and permitting close stacking of the same. Preferably, the motor mount is disposed on the interior side of the housing outlet end, and includes a vertically sliding plate to which the motor is attached, and an adjustment·screw which raises and lowers the motor with respect to the housing for adjusting the tension of the drive belt.

The present invention is particularly adapted for corner hoppers, and includes a housing having a passageway extending through one sidewall and the base thereof, in which a conventional feed conduit is inserted. Hence, the corner hoppers can be vertically stacked closely together for maximum efficiency, and the passageways provide an uncomplicated design which permits feed to be introduced into the hoppers through an overhead conveyor mechamism. Preferably, the passageways extend through the interior end of the housings to alleviate interference with the other portions of the conveyors.

The invention may be carried into practice in various ways but one poultry feed system embodying the invention will now be described by way of example with reference to the accompanying drawings, in which:

Figure 1 is a fragmentary perspective view of the multi-tier poultry feed system, which includes four low profile hopper units;

Figure 2 is a side elevation to a larger scale of one of the hopper units, taken from the inlet side thereof;

Figure 3 is a bottom plan view of the hopper unit shown in Figure 2;

Figure 4 is a side elevation of the hopper unit, taken from the outlet side thereof, with a portion broken away to reveal the internal construction; and

Figure 5 is a side elevation of the motor mount arrangement attached to one of the hopper units.

For convenience, the drawings show only the hopper units of the feed systems of a multi-tier battery system. The remaining parts of the battery system are of the construction described above and in the aforementioned BIG DUTCHMAN brochure.

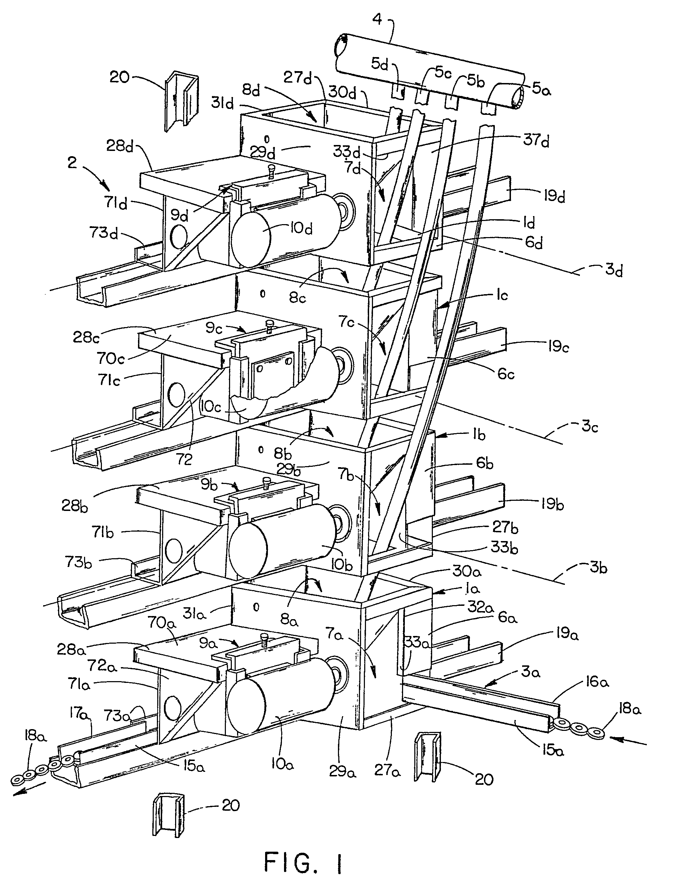

The drawings show the corner hoppers $1\underline{a}$ to $1\underline{d}$ of an automatic four-tier poultry feed system 2. The illustrated poultry feed system 2 includes four tiers of conveyors 3. Since the various parts of each tier are substantially identical, corresponding parts are represented by the same reference numeral in Figure 1, except for the suffixes "$\underline{a}$", "$\underline{b}$", "$\underline{c}$" and "$\underline{d}$" to designate the specific tier. Although the present invention is described herein in conjunction with corner hoppers $1\underline{a}$ to $1\underline{d}$, it is to be understood that the concepts disclosed are equally applicable to other types of conveyor feeder units, including those which are mounted between the corners of the conveyor.

The feed system 2 is of the type having a plurality of feed conveyors or conveyor mechanisms $3\underline{a}$ to $3\underline{d}$ to which feed is supplied from an overhead header 4 through individual tubes or conduits $5\underline{a}$ to $5\underline{d}$ which extend into the corner hoppers 1. Each corner hopper 1 has a housing 6 and a drive motor mount 9 which allow the corner hoppers 1 to be vertically stacked closely together to achieve significant space savings and efficiency. Each housing 6 includes a passageway 7 through one sidewall and the base of the corner hopper 1, and in the case of all the housings except the lowest a feed supply conduit 5 is inserted through the passageway 7 to transport feed from a remote storage bin (not shown) into the hopper section 8 of the corner feeder next below.  The motor mount 9
supports a conveyor drive chain motor 10 at a position
alongside the housing 6 to minimize the overall height
of the corner hopper.  The configuration of corner
hoppers 1 allows them to be stacked closely together
to achieve maximum efficiency.

Each conveyor 3a to 3d includes an open feed
trough 15 having an inlet or return side 16 and an
outlet side 17.  A feed carrier, such as a conveyor
belt or the illustrated drag chain 18, is moved
continuously along the bottom of the feed trough
15 and provides a constant supply of feed to the
confinement cages (not shown).  In Figure 1, the
feed trough of only the bottom unit is shown.  Each
conveyor tier and corner hopper 1 is supported on a
generally horizontally extending channel 19; the
channels 19 are in turn interconnected and supported
above the ground by vertical support channels 20
spaced along the length of the system.

In the arrangement illustrated in Figure 1, the
four corner hoppers 1a to 1d are vertically aligned,
such that the base of the upper corner feeder is
positioned directly above the top of the lower corner
feeder.  The corner feeders 1a to 1d are preferably
stacked as close together vertically as possible.
In this example, the lower surfaces of the horizontal
support channels 19 are disposed adjacent the upper
surfaces of the lower hopper sections 8, such that
the distance between adjacent corner feeders is
substantially equal to the height of the horizontal support channels 19. This distance is less than the diameter of the feed conduits 5, so that it is not possible to insert one of the feed conduits between adjacent corner hoppers 1a to 1d. Further, even if somewhat smaller feed conduits could be used, they would require specially designed, rigid angles or bends to direct the feed into the hoppers 8a to 8c from the generally vertically extending portions of the feed conduits 5a to 5c and therefore restrict or impede the flow of feed to the hoppers 8a to 8c.

Each corner hopper housing 6 (Figure 1) includes two generally rectangular portions 27 and 28 disposed at the inlet and outlet sides 16 and 17 of the housing 6 respectively. The inlet section 27 includes a pair of sidewalls 29 and 30, an exterior end wall 31, and an interior end wall 32 having an opening 33 therethrough which forms part of the passageway 7, as described in greater detail hereinafter.

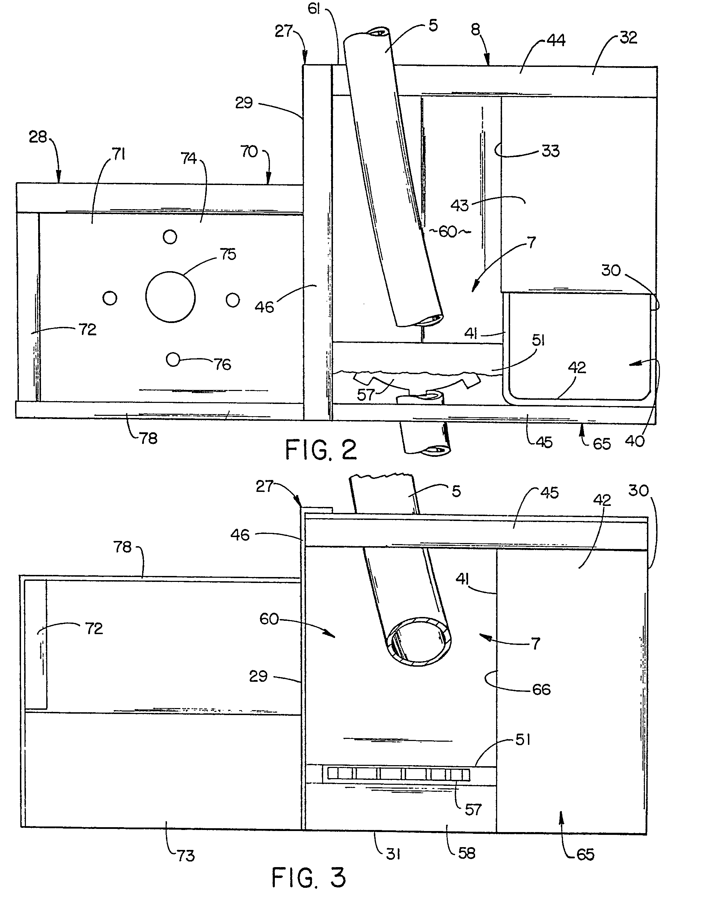

With reference to Figures 2 and 3, the inlet section 27 includes a U-shaped return trough 40, defined by the exterior sidewall 30, an intermediate sidewall 41, and a base 42. A cover 43 is positoned over the side edges of the walls 30 and 41 at the upper portion of the corner hopper, so as to impart a generally rectangular configuration to the return chute opening, into which the feed trough is inserted. The interior end wall 32 of the inlet section 27 further includes an upper frame member 44, a lower frame member 45, and a side frame member 46, which are rigidly interconnected with the sidewalls of the housing and trough to form a rigid structure. The opening 33 (Figure 2) in the interior end wall 32 is defined by the illustrated portions of the lower frame member 45 at the base, the upper frame member 44 at the top, the side frame member 46 on the left-hand side, and the sidewall 41 with the flange of the cover 43 on the right-hand side, as viewed in Figure 2.

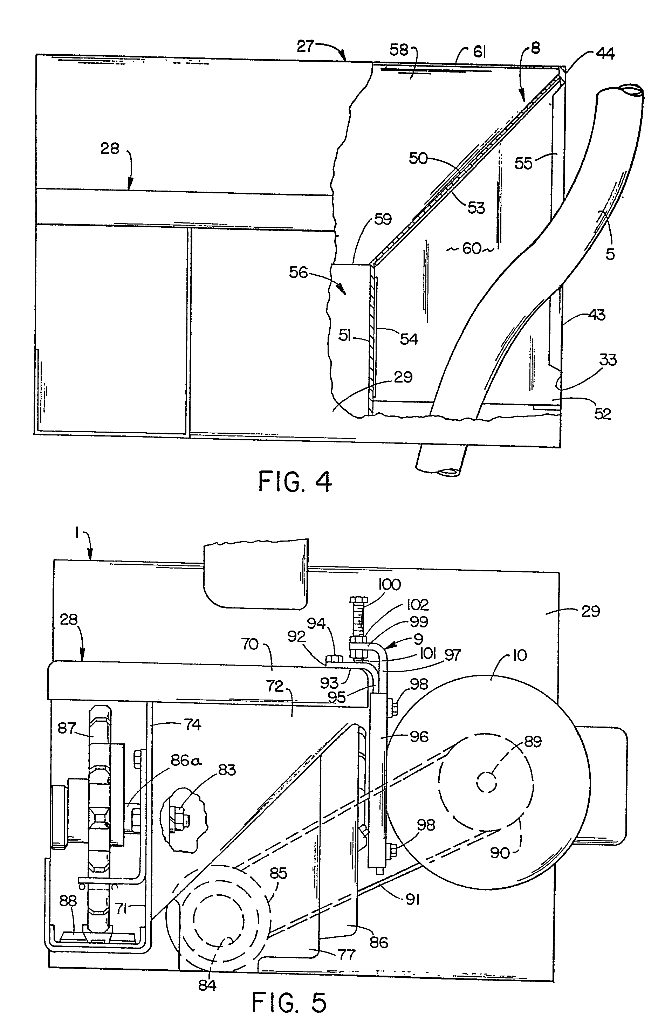

As can be seen in Figure 4, the hopper section 8 of the hopper is located in the inlet section 27, and includes an inclined base 50 extending from the upper frame member 44 of the housing 6 to a vertically disposed rear wall 51. A trapezoidally-shaped sidewall 52 extends along the interior sidewall 41 of the inlet trough 40, and is fastened to the walls 50 and 51 by means such as the illustrated flanges 53 and 54, which are welded to the adjacent hopper walls. The cover member 43 also includes a lip or flange 55 which extends over the outer edge of the sidewall 52 and is attached thereto by means such as welds.

The rear hopper wall 51 forms part of a pocket 56 located at the lower end of the section 8, into which a feed remix wheel or sprocket 57 (Figure 2) is rotatably mounted, as described in greater detail hereinafter. The remaining hopper walls 58 (Figure 4) extend from the rim 61 of hopper portion 8 to the upper edge 59 of the pocket 56, and direct feed from the hopper onto the remix wheel 57. The housing sidewalls 52 and 29, in conjunction with the hopper walls 50 and 51, form a cavity 60 disposed generally beneath hopper portion 8, which communicates with the housing opening 33, and is shaped to receive the feed conduit 5 therethrough, as described below.

With reference to Figure 3, the base 65 of the inlet housing 27 includes a large opening 66 therethrough, which, when the system is assembled, is located directly above the hopper portion 8 of the underlying corner hopper unit 1. The opening 66 communicates with the housing cavity 60, and in conjunction with the sidewall opening 33, defines the passageway 7 through which the feed supply conduit 5 extends so as to transport feed from a remotely disposed source (not shown) into the hopper unit 1. In this example, the base 65 is formed by the lower surface of the chute base 42, which is connected with the lower frame member 45, and the side frame member 46. The illustrated base opening 66 has a generally rectangular shape, and is defined by that area disposed between associated portions of the rear wall 51, the interior trough sidewall 41, the front frame member 45, and the side frame member 46.

With reference to Figures 1 and 2, the outlet portion 28 of the housing 6 includes a top plate 70 with a J-shaped channel member 71 attached along one side thereof, and a triangular gusset 72 at the outer end of the housing to securely interconnect the plate 70 to the channel member 71. The upper plate 70 is disposed at an elevation lower than the upper rim 61 of the hopper portion 8, and extends in an interior direction along only a portion of the housing sidewall 29, so as to form a space on the interior side of the housing portion 28 in which drive motor 10 is positioned. The lower end of the J-shaped channel member 71 forms an outlet trough 73 in which the mating portion 17 of the open feed trough 15 is received. The rear wall 74 (Figure 2) of the channel member 71 includes a central aperture 75 with fastener apertures 76 spaced thereabout for mounting a speed reducer 77 (Figure 5) to the housing 6, as described in greater detail hereinafter. A laterally extending frame brace 78 connects the lower end of the gusset 72 with the vertical frame 46 of the housing portion 27 to form a very rigid structure.

As best shown in Figure 5, the illustrated corner hopper unit 1 has a conventional belt driven speed reducer 77 mounted on the rear plate 74 of the outlet housing channel member 71 by means such as fasteners 83. The speed reducer 77 includes a belt driven input shaft 84 having a pulley 85 mounted thereon, and is oriented toward the interior sidewall 29 of the housing portion 27. The housing 86 of the speed reducer 77 is generally shaped to fit within the cavity formed by the gusset 72, housing sidewall 29, and the lower surface of the plate 70. The speed reducer 77 also includes an output shaft 86a which extends at right angles to the input shaft 84, through the centre area of the housing wall 74, and includes a conventional chain drive sprocket 87 mounted thereon.

During use, activation of the motor 10 rotates the drive sprocket 87, which in turn engages the feed chain 88 in the output trough, and thereby translates the feed chain in the conveyor.

The motors 10 are supported in a generally horizontal orientation by mounting brackets 9. Each motor includes a drive shaft 89 with a pulley 90 mounted on the outer end of the shaft 89, in alignment with the speed reducer pulley 85. A flexible V-belt 91 extends between the pulleys 89 and 90 and is entrained thereover for transmitting rotational motion therebetween.

With reference to Figure 1, the mounting brackets 9a to 9d support drive motors 10a to 10d on the interior ends of the housing portions 28a to 28d so as to minimize the overall height of the corner hoppers, and thereby permit the corner hoppers to be vertically stacked closely together to achieve a very compact, low profile design. Each mounting bracket 9 (Figure 5) includes an L-shaped base or support plate 92, having a horizontally extending flange or lip 93 attached to the upper surface of the housing plate 70 by fasteners 94. The other flange 95 of the support plate 92 extends in a substantially vertical orientation adjacent the interior side of outlet housing 28, and abuttingly overlies the outer end of the speed reducer 77. A pair of C-shaped channels 96 are mounted along the side edges of the base plate 92, and face inwardly in an opposed fashion. A mounting plate 97 is slidably mounted between the channels 96 of the support plate 92, and includes suitable means, such as fasteners 98, on the vertically extending portion thereof for securely mounting the motor 10 thereon. The upper end of the mounting plate 97 comprises an in-turned flange 99, facing the direction of the base plate flange 93, and includes an adjustment screw 100 threadedly mounted therein in a parallel relationship with the longitudinal axis of the mounting plate 97. The adjustment screw 100 includes a free end 101 which abuts a stationary surface of the housing 6, whereby extension and retraction of the adjustment screw 100 raises and lowers the motor 10 with respect to the housing 6, and adjusts the tension of the drive belt 91. In this example, a pair of nuts 102 are positioned on the adjustment screw 100 on either side of the mounting flange 99 to lock adjustment screw 100 in place. The weight of the motor 10 maintains the mounting plate 97 in abutment with the support plate 92.

The corner hoppers 1a to 1d (Figure 1) are assembled by positioning the same on the horizontal support channels 19a to 19d, and attaching each corner hopper thereto. In this example, the corner hoppers 1a to 1d are arranged in a vertically aligned relationship. However, it is to be understood that the present invention may also be used in conjunction with poultry feeding systems wherein the cage tiers are inclined slightly in an A-frame configuration, and wherein the feeder units are stacked closely enough together to prevent feed conduits from being inserted therebetween.

The lower ends of the feed conduits 5a to 5d are inserted into the hoppers 8a to 8d respectively. The first conduit 5d can be set directly into the hopper 5d of the uppermost corner feeder 1d. The second conduit 5c is threaded through the passageway 7d in corner feeder 1d, and thence into the open end of hopper 8c. In like manner, conduit 5b is inserted through passageway 7c in corner feeder 1c, and thence into hopper 8b of corner feeder 1b. Finally, feed conduit 5a extends vertically along the inside of the system, and is threaded through passageway 7b in corner feeder 1b, and thence into hopper 8a of corner feeder 1a. In this manner, conduits 5a to 5d can communicate with their respective hoppers 8a to 8d without severe bending or kinking of the feed conduits which might restrict or otherwise impede the flow of feed therethrough.

Each motor mounting plate 97, with an associated motor 10 attached thereto, is then slid into its respective base plate channels 96, so that the motor 10 hangs from the mounting plate with its axis of rotation in a substantially horizontal orientation. The drive belt 91 is then positioned over the motor and speed reducer pulleys 90 and 85, and the screw 100 is adjusted to ensure proper belt tension.

The low profile corner hoppers 1a to 1d permit the corner hoppers to be vertically stacked closely together to achieve significant space savings and efficiency. The passageways 7a to 7d formed in the corner hopper housings 6a to 6d permit the feed conduits
5a to 5d to be threaded through the housings to
deliver feed to the feed unit hoppers 8a to 8d without
severely bending the conduits or otherwise restricting
the free flow of feed to the corner hoppers.  The
mounts 9a to 9d for the conveyor drive motors 10a to
10d support the motors at a positon alongside the
housings 6a to 6d, so as to minimize the overall
height of the feed corner units, and permit them to
be stacked closely together in vertical alignment.

## CLAIMS

1.    A multi-tier poultry feed system (2) comprising a plurality of stacked conveyor mechanisms (3) to each of which feed is supplied from a remotely disposed source (4) by an individual feed supply conduit (5), each mechanism including a hopper (8), a feed trough (15) and means (18) for conveying feed from the hopper along the feed trough, characterised in that:

the hoppers are vertically stacked closely together one above the other for space saving and efficiency;

each of the hoppers includes a housing formed by a plurality of walls (50, 58) that define an area (8) for containing feed;

the housing having an upwardly facing open top end for receiving feed;

the housing walls being so arranged to provide a cavity (60) below a portion of the hopper and a side opening (33) leading into the cavity thereby providing communication with the cavity from outside of the hopper;  and

the cavity and side opening, when one of the hoppers is located directly above another of the underlying hoppers, forming a passageway disposed immediately above the upwardly facing open end of the underlying feed hopper and extending outside the confines of the walls of the housing, whereby the passageway can receive one of the feed supply conduits, so as to permit transport of feed through the conduit from the remotely disposed source into the underlying feed hopper.

2. A multi-tier poultry feed system according to Claim 1 in which the feed source (4) is positioned overhead the conveyors, and the feed conduits extend therefrom in a generally vertical orientation.

3. A multi-tier poultry feed system according to Claim 1 or Claim 2 in which each housing includes first and second portions (27, 28) in which mutually perpendicular inlet and outlet troughs (16, 17) are respectively disposed and receive an associated conveyor therein; and in which the hopper has inwardly inclined walls, which in conjunction with an interior side (41) of said inlet trough (16) define two sides of said cavity.

4. A multi-tier poultry feed system according to Claim 3 in which the housing first portion (27) has a generally rectangular shape with interior side and end walls and exterior side and end walls, the inlet trough (16) extends along the exterior sidewall of the said housing first portion, the housing opening (33) is disposed in the interior end wall of the housing first portion, and the interior sidewall defines a third side of the housing cavity.

5. A multi-tier poultry feed system according to any of Claims 1 to 4 in which each of the corner hopper units has a conveyor drive motor (10) and a mount (9) therefor which supports the motor at a position alongside the housing for minimizing the overall height of the corner hopper units and permitting the hoppers to be closely stacked one above the other.

**0056733**

6.     A multi-tier poultry feed syttem according
to Claim 5 in which the mount supports the motor in a
generally horizontal orientation along an interior
side of the housing.

7.     A multi-tier poultry feed system according
to Claim 5 or Claim 6 in which the housing includes
an inlet portion (27) in which the hopper is disposed,
and an outlet portion (28) on which the drive motor
is mounted.

8.     A multi-tier poultry feed system as claimed
in Claim 5 or Claim 6 or Claim 7 in which the motor
mount comprises support means (92) attached to the
housing and including a vertically disposed support
plate (95) extending alongside an interior side of said
housing, a motor mounting plate (97) having a motor
mounted thereon, the support plate or mounting plate
having a pair of opposed channels (96) disposed along
the side edges thereof, the other of the support
plate and mounting plate being slidably received
between the said opposed channels, and an adjustment
screw (100) threadedly mounted in the mounting plate
parallel to the direction of relative slidable movement
of the mounting plate with respect to the support
plate, the screw having a free end (101) thereof
abutting a stationary surface of said support means
whereby extension and retraction of the adjustment
screw raises and lowers the motor with respect to the
housing for adjusting drive belt tension.

9. A hopper construction for poultry feeding
equipment, the hopper including a housing (6) with an
inlet and an outlet, and a conveyor means(3) passing
through the hopper from the inlet to the outlet; the
housing having a plurality of walls (50, 58) defining
a container for the feed and a passageway for the
conveyor means whereby feed is carried by the
conveyor means out of the outlet to a trough means
for feeding poultry; the walls being arranged to form
a cavity (60) below a portion of the hopper; and
a side opening (33) leading into the cavity providing
communication with the cavity from the outside of the
hopper thereby forming a passageway for receiving
a feed conduit (5).

10. A hopper construction according to Claim 9
in which the cavity and side opening is formed by
inclining at least a portion of the wall (50) of one
of the sides of the housing inwardly toward at least
one of the other walls leaving the void created along
the said one side and along the bottom of the hopper
open to provide to the said passageway.

11. A hopper construction for poultry feeding
equipment, the hopper including a housing (6) with an
inlet and an outlet, and a conveyor means (3) passing
through the hopper from the inlet to the outlet; a
conveyor drive means for driving the conveyor means,
the drive means including a drive motor (10) and a
support means (9) attached to the housing for supporting
the motor, characterised in that the support means
includes a vertically disposed support plate (95)
extending alongside a side of said housing adjacent said outlet, a motor mounting plate (97) having a motor (10) mounted thereon, one of the support plate and mounting plate having a pair of opposed channels (96) disposed along the side edges of said support plate and the other of said support plate and mounting plate being slidably mounted between the opposed channels, and an adjustment screw (100) threadedly mounted in the mounting plate parallel to the direction of relative slidable movement of said mounting plate and support plate, the screw having a free end (101) thereof abutting a stationary surface of said support means whereby extension and retraction of said adjustment screw raises and lowers said motor with respect to said housing for adjusting drive belt tension.

FIG. 1

FIG. 2

FIG. 3

FIG. 4

FIG. 5

European Patent Office

EUROPEAN SEARCH REPORT

## DOCUMENTS CONSIDERED TO BE RELEVANT

| Category | Citation of document with indication, where appropriate, of relevant passages | Relevant to claim |
|---|---|---|
| Y | US - A - 3 785 345 (V.E. RHINEHART et al.)<br>* claims 12, 17; column 3, line 53 to column 4, line 10; fig. 1, 3 * | 1,5,6,9 |
| Y | GB - A - 1 093 166 (THORNBER BROTHERS LTD.)<br>* page 2, lines 46 to 52; fig. 2 * | 1 |
| Y | US - A - 4 195 594 (A.J. SICILIANO et al.)<br>* claims 1, 8, 9, 15, 16, 26; column 2, lines 24 to 48; fig. 1 * | 1,2 |
| Y | FR - A1 - 2 436 559 (A.V.I.N.O.V. S.A.R.L.)<br>* claims 1, 3; page 1, lines 5 to 26; fig. 1 * | 1,2 |
| Y | US - A - 3 433 205 (E.W. PITTARD)<br>* column 2, line 62 to column 3, line 11; fig. 1 * | 1,3, 4-7, 9,10 |
| Y | US - A - 3 389 689 (R.L. VAN HUIS)<br>* column 2, lines 26 to 38; fig. 1 * | 1,3, 4-7, 9,10 |

./..

**CLASSIFICATION OF THE APPLICATION (Int. Cl. 3)**

A 01 K 39/012

**TECHNICAL FIELDS SEARCHED (Int.Cl. 3)**

A 01 K 5/00
A 01 K 31/00
A 01 K 39/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 01-03-1982 | BERGZOLL |

EPO Form 1503.1  06.78

European Patent Office

**EUROPEAN SEARCH REPORT**

| Category | Citation of document with indication, where appropriate, of relevant passages | Relevant to claim |
|---|---|---|
| | **DOCUMENTS CONSIDERED TO BE RELEVANT** | |
| D,A | BIG DUTCHMAN "Profit-Tier Reverse Cage System" Atlanta, USA SL 179-65, four pages | |

----

CLASSIFICATION OF THE APPLICATION (Int. Cl ³)

TECHNICAL FIELDS SEARCHED (Int. Cl.³)

EPO Form 1503.2    06.78